# EUROPÄISCHE PATENTSCHRIFT

(11) **EP 2 360 057 B1**
(45) Veröffentlichungstag und Bekanntmachung des Hinweises auf die Patenterteilung: **03.04.2013**
(21) Anmeldenummer: 11155004.2
(22) Anmeldetag: 18.02.2011
(51) Int. Cl.: B60R 5/04

(54) **Anordnung eines Laderaumbodens**
Assembly of a storage area floor
Agencement d'un sol d'espace de stockage

(30) Priorität: 19.02.2010 DE 102010008674; 26.02.2010 DE 102010009564
(43) Veröffentlichungstag der Anmeldung: 24.08.2011
(73) Patentinhaber: Bayerische Motoren Werke Aktiengesellschaft, 80809 München (DE)
(72) Erfinder: Bissinger, Andreas, 80997, Muenchen (DE); Bade, Jochen, 85221, Dachau (DE); Ferrufino Camacho, David Alfredo, 80939, Muenchen (DE); Sax, Johann, 84546, Egglkofen (DE)

(56) Entgegenhaltungen:
- EP-A1- 1 806 261
- EP-A1- 1 955 897
- EP-A2- 1 068 996
- DE-A1- 10 317 539
- DE-A1- 19 913 743
- DE-A1-102007 020 919
- DE-A1-102009 010 967

## Beschreibung

Die Erfindung betrifft eine Anordnung eines Laderaumbodens nach dem Oberbegriff des Anspruchs 1.

Aus der DE 103 16 887 A1 ist eine Anordnung eines Laderaumbodens bekannt. In der etwa horizontalen Lage des Laderaumbodens überdeckt dieser die Ladefläche des Gepäckraums. Durch Verschwenken entlang einer etwa in Fahrzeugquerrichtung verlaufenden Schwenkachse, die an der Rückseite der vor dem Gepäckraum angeordneten Sitzanlage vorgesehen ist, kann der Laderaumboden an seinem sitzabgewandten Endabschnitt angehoben werden und bis zur Anlage an der Rückseite der Rückenlehne der Sitzanlage hochgeschwenkt werden.

Ferner ist aus der EP 1 806 261 A1 eine gattungsgemäße Anordnung eines Laderaumbodens bekannt, mit einer Arretiereinrichtung, die bei Verschwenken des Laderaumbodens in eine hochgeklappte Sichtschutzposition den Laderaumboden in dieser aufrechten Position arretiert. Hierbei wirkt ein erstes Element der Arretiereinrichtung am Laderaumboden mit einem zweiten Element der Arretiereinrichtung zusammen, das an einem seitlichen Abschnitt des Fahrzeugs vorgesehen ist.

Aufgabe der Erfindung ist es, die Funktionalität der bekannten Anordnung eines Laderaumbodens zu verbessern.

Diese Aufgabe wird durch eine Anordnung eines Laderaumbodens mit den Merkmalen des Anspruchs 1 erreicht.

Kerngedanke der Erfindung ist es hierbei, bei einem Fahrzeug mit einer etwa in Brüstungshöhe angeordneten Hutablage, die einen horizontalen Abschluss des Gepäckraums bildet, den Laderaumboden in einen vorderen und in einen hinteren Abschnitt zu unterteilen, wobei der hintere Abschnitt gegenüber dem vorderen Abschnitt verlagerbar ist, so dass in der Sichtschutzposition der hintere Abschnitt des Laderaumbodens umgeklappt werden kann, um ein Einschwenken in den Raum unterhalb der Hutablage zu ermöglichen.

Außerdem ist an wenigstens einem Seitenbereich des Fahrzeugs eine Arretiereinrichtung vorgesehen, um den in eine Sichtschutzposition hochgeklappten Laderaumboden unabhängig von der Position der Komponenten der Sitzanlage arretieren zu können. Mit der erfindungsgemäßen Anordnung eines Laderaumbodens wird eine Doppelfunktion desselben erreicht, indem der Laderaumboden entweder in einer etwa horizontalen Lage als Abdeckung für ein Staufach im unteren Bereich des Gepäckraums dient oder in seiner hochgeschwenkten Lage als Sichtschutz zwischen Fahrgastraum und Gepäckraum fungiert. In der erstgenannten Funktion überdeckt der Laderaumboden ein großvolumiges Staufach im unteren Bereich des Gepäckraums, wie es an sich aus der DE 103 17 539 A1, Figuren 3 und 4 bekannt ist. In seiner zweiten Funktion wirkt der Laderaumboden - unabhängig von der Position der Komponenten der Sitzanlage - als Sichtschutz, indem er den Insassen im Fahrgastraum eine blickdichte Barriere zur Verfügung stellt, so dass der Laderaum und darin befindliche Gegenstände für die Insassen nicht mehr sichtbar sind. Diese Sichtschutzfunktion wird durch die Arretierung des Laderaumbodens mittels eines zweiten Elements der Arretiereinrichtung ersielt, das an einem Seitenbereich Fahrzeuginnenraums, bevorzugt auf Brüstungshöhe, angeordnet ist und mit einem ersten Element der Arretiereinrichtung zusammenwirkt, das an dem Laderaumbodenvorgesehen ist, bevorzugt in dessen hinteren seitlichen Bereich. Durch die Erfindung wird eine zuverlässige Arretierung des Laderaumbodens gewährleistet, unabhängig von der Position der Komponenten der Sitzanlage.

In Ausgestaltung der Erfindung ist in der abgesenkten Abdeckposition des Laderaumbodens der hintere Abschnitt des Laderaumbodens fluchtend mit dem vorderen Abschnitt ausgerichtet und eine bildet hierdurch eine durchgehende, etwa horizontal verlaufende Ebene.

In Weiterbildung der Erfindung sind der vordere und der hintere Abschnitt des Laderaumbodens durch ein etwa quer zur Fahrtrichtung verlaufendes Filmscharnier miteinander verbunden.

In Ausgestaltung der Erfindung ist die Schwenkachse fahrzeugfest und damit unabhängig von der Sitzanlage angeordnet.

Bevorzugt ist sowohl an der linken und als auch an der rechten Seite von Laderaumboden und Fahrzeugseitenbereich jeweils ein erstes sowie ein zweites Element der Arretiereinrichtung vorgesehen, um den Laderaumboden mit breiter Abstützbasis arretieren zu können.

In einer bevorzugten Ausgestaltung der Erfindung erfolgt die Arretierung des hochgeklappten Laderaumbodens selbsttätig, indem das erste Element der Arretiereinrichtung, das am Laderaumboden angeordnet ist, selbsttätig mit dem zweiten Element der Arretiereinrichtung verrastet, so bald sich die beiden Elemente im Verlauf des Verschwenkens des Laderaumbodens gegenüber stehen. Hierdurch ist gewährleistet, dass der Laderaumboden sicher und ohne weiteres Zutun eines Fahrzeugnutzers in einer vorgegebenen Position arretiert wird. Unabhängig von der Arretierung des Laderaumbodens ist eine vielfältige Verstellung der Komponenten der Sitzanlage möglich.

Die selbsttätige Arretierung des Laderaumbodens wird beispielsweise durch wenigstens eine unter Federvorspannung stehende riegelartige Komponente bewirkt, die translatorisch oder rotatorisch geführt ist. Die Aufhebung der Arretierung erfolgt manuell oder durch Fremdkraft. Eine einfache und funktionssichere Ausführung der Arretiereinrichtung hat als erstes Element beispielsweise einen Riegel am Laderaumboden, der in Fahrzeugquerrichtung unter Federvorspannung steht und den Riegel in Richtung der Fahrzeuginnenseite vorspannt, wo das zweite Element der Arretiereinrichtung in Form einer korrespondierenden Riegelaufnahme vorgesehen ist. Mittels eines Schiebegriffes an der Unterseite des Laderaumbodens kann der Riegel nach innen zurückverlagert werden, um die Arretierung des Laderaumbodens in der Sichtschutzposition aufzuheben.

In einer weiteren vorteilhaften Ausführungsform der Erfindung wirkt die Arretiereinrichtung unabhängig von der Schwenkrichtung des Laderaumbodens, das heißt, der Laderaumboden wird in jedem Fall in einer vorgegebenen Sichtschutzposition arretiert, unabhängig davon, ob er aus dem Gepäckraum oder aus dem Fahrgastraum hochgeklappt wird.

Die Sichtschutzfunktion des Laderaumbodens ist beispielsweise dann besonders von Vorteil, wenn es sich bei der Sitzanlage um eine Sitzanlage mit Verstellmöglichkeiten einzelner Komponenten der Sitzanlage handelt. Die Sitzanlage ist beispielsweise als Fondsitzanlage mit zwei Einzelsitzen ausgebildet. Die beiden Einzelsitze können zwischen sich einen größeren Freiraum aufweisen, der zum Beispiel durch eine Mittelarmlehne verschlossen werden kann, jedoch auch offen ausgestaltet sein kann, beispielsweise um eine Durchlademöglichkeit zwischen Fahrgastraum und Gepäckraum zu schaffen. In einer möglichen Ausführungsform kann in diesem Freiraum eine zwischen den beiden Einzelsitzen verlaufende Schiene vorgesehen sein, wobei die Schiene als Wechselaufnahme für Interieur-Komponenten ausgebildet sein kann, insbesondere mit der Möglichkeit, die Interieur-Komponenten zu verschieben. Bei den Interieur-Komponenten kann es sich beispielsweise um eine Armauflage, einen Getränkehalter, ein Aufnahmefach für eine Brille etc. handeln.

Die Sitzanlage kann wenigstens eine Rückenlehne aufweisen, die in ihrer Neigung verstellbar ist. Auch kann die Sitzanlage wenigstens ein Sitzkissen aufweisen, das in Fahrtrichtung und entgegen der Fahrtrichtung verschiebbar ist. Auch sind weitere Verstellmöglichkeiten denkbar. In allen genannten Fällen erfüllt der in seine Sichtschutzposition gebrachte Laderaumboden die Aufgabe, den Gepäckraum gegenüber dem Fahrgastraum blickdicht abzuschließen, unabhängig von der Position der Komponenten der Sitzanlage.

Weitere vorteilhafte Ausgestaltungen der Erfindung sind Gegenstand von Unteransprüchen.

Mögliche Ausführungsbeispiele der Erfindung sind in der Zeichnung anhand schematischer Darstellungen aufgezeigt und werden nachfolgend näher erläutert.

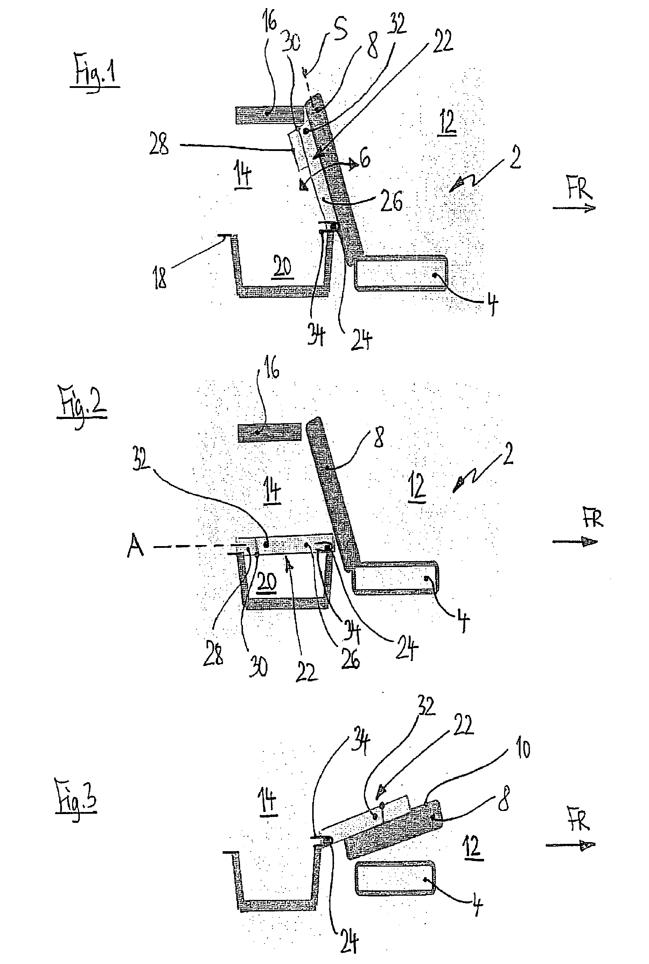

Die Figuren 1 bis 9 zeigen hierbei unterschiedliche Konstellationen von Laderaumboden und Sitzanlage.

Eine in ihrer Gesamtheit mit 2 bezeichnete Sitzanlage ist als Fondsitzanlage mit zwei Einzelsitzen ausgebildet, Jeder Einzelsitz setzt sich aus einem parallel zur Fahrtrichtung FR verschieblichen Sitzkissen 4 sowie einer in Richtung des Doppelpfeils 6 verschwenkbaren Rückenlehne 8 zusammen. Die Fondsitzanlage 2 befindet sich ― ebenso wie nicht dargestellte Sitze für Fahrer und Beifahrer - im Fahrgastraum 12 eines nicht näher dargestellten Kraftfahrzeugs. Die Fahrtrichtung FR ist auf die Geradeausfahrt des Kraftfahrzeugs bezogen und stimmt mit der Längsrichtung des Kraftfahrzeugs überein.

An den Fahrgastraum 12 schließt sich ein Gepäckraum 14 an. Der Gepäckraum 14 wird rückseitig durch eine nicht dargestellte Heckklappe verschlossen. Die Laderaumkante des Gepäckraums 14 ist mit 18 bezeichnet. Oberseitig, etwa in Brüstungshöhe, befindet sich eine Hutablage 16 als horizontaler Abschluss des Gepäckraums 14. Unterhalb der Ladekante 18 befindet sich ein Gepäckraumabschnitt 20 in Form eines Staufaches, das den unteren Bereich des Gepäckraums 14 bildet. Der untere Gepäckraumabschnitt 20 erstreckt sich über nahezu die gesamte Innenbreite des Kraftfahrzeuges und entspricht damit in etwa dem in den Figuren 3 und 4 der DE 103 17 539 A1 dargestellten unteren Gepäckraumabschnitt.

Erfindungsgemäß ist ein Laderaumboden 22 mittels einer Schwenkachse 24 in einer fahrzeugfesten Führung 34 am vorderen Ende des Gepäckraums 14 schwenkbar gelagert. Der Laderaumboden 22 setzt sich aus einem vorderen Abschnitt 26 sowie einem hinteren Abschnitt 28 zusammen. Die Trennung zwischen den beiden Abschnitten 26 und 28 verläuft etwa senkrecht zur Fahrtrichtung FR. Die beiden Abschnitte 26 und 28 sind beispielsweise über ein Filmscharnier 30 miteinander schwenkbar verbunden. Ebenso ist eine teleskopartige Schiebeführung für die Längenanpassung des Laderaumbodens 22 vorstellbar.

In der in Figur 1 dargestellten Sichtschutzposition S ist der Laderaumboden 22 über Arretiereinrichtungen 32 in seiner hochgeschwenkten Position arretiert. In dieser Sichtschutzposition S schließt der Laderaumboden 22 den Fahrgastraum 12 des Kraftfahrzeuges blickdicht gegenüber dem Gepäckraum 14 ab. Da der Laderaumboden 22 hochgeschwenkt ist, besteht ein ungehinderter Zugang zum Stauvolumen im Gepäckraumabschnitt 20.

Wie aus Figur 2 hervorgeht, kann der Laderaumboden 22 durch Verschwenken um die Schwenkachse 24 in eine horizontale Abdeckposition A gebracht werden, in der er den unteren Gepäckraumabschnitt 20 oberseitig abdeckt. Hierbei liegt der Laderaumboden 22 auf seitlichen Kanten sowie auf einer hinteren Kante des Gepäckraumes 14 auf, in ähnlicher Weise wie in den Figuren 3 und 4 der DE 103 17 539 A1 dargestellt. Während in der Sichtschutzposition S der hintere Abschnitt 28 des Laderaumbodens 22 umgeklappt ist, um ein Einschwenken in den Raum unterhalb der Hutablage 16 zu ermöglichen, ist in der abgesenkten Abdeckposition A des Laderaumbodens 22 der hintere Abschnitt 28 des Laderaumbodens 22 fluchtend mit dem vorderen Abschnitt 26 ausgerichtet und bildet eine durchgehende, etwa horizontal verlaufende Ebene.

In der Abdeckposition A des Laderaumbodens 22 wird das Beladen und vor allem das Entladen des Gepäckraumes 14 erleichtert, da der Boden des Gepäckraums 14 auf das Niveau der Ladekante 18 angehoben wird. In der Abdeckposition A des Laderaumbodens 22 wird also das Ein- und Ausladen von schwerem Ladegut erleichtert, während die Sichtschutzposition S des Laderaumbodens 22 beim Transport von großvolumige Ladegut von Vorteil ist, da hierdurch auch der untere Gepäckraumabschnitt 20 als zusammenhängender Stauraum genutzt werden kann.

Figur 3 zeigt eine weitere mögliche Anordnung des Laderaumbodens 22. Hierbei sind die Rückenlehnen 8 der Fondsitzanlage 2 nach vorne geklappt, um den Gepäckraum 14 in Richtung des Fahrgastraums 12 zu vergrößern. Gleichzeitig sind die Sitzkissen 4 der Fondsitzanlage 2 in Fahrtrichtung FR nach vorne verschoben und/oder sind die Rückenlehnen 8 steiler gestellt (so genannte "Cargo-Position"). Selbstverständlich kann die Fondsitzanlage 2 jedoch auch in ihrer in den Figuren 1 und 2 dargestellten zurückgeschobenen "Komfort-Position" mit stärker nach hinten geneigten Rückenlehnen 8 verbleiben. Der Laderaumboden 22 ist nach vorne auf die Rückseite 10 der umgelegten Rückenlehnen 8 der Fondsitzanlage 2 verschwenkt. Da die Schwenkachse 24 des Laderaumbodens 22 in einer etwa U-förmigen Führung 34 aufgenommen ist, deren offene Seite entgegen der Fahrtrichtung FR gerichtet ist, wird der Laderaumboden 22 sicher in der Führung 34 gehalten.

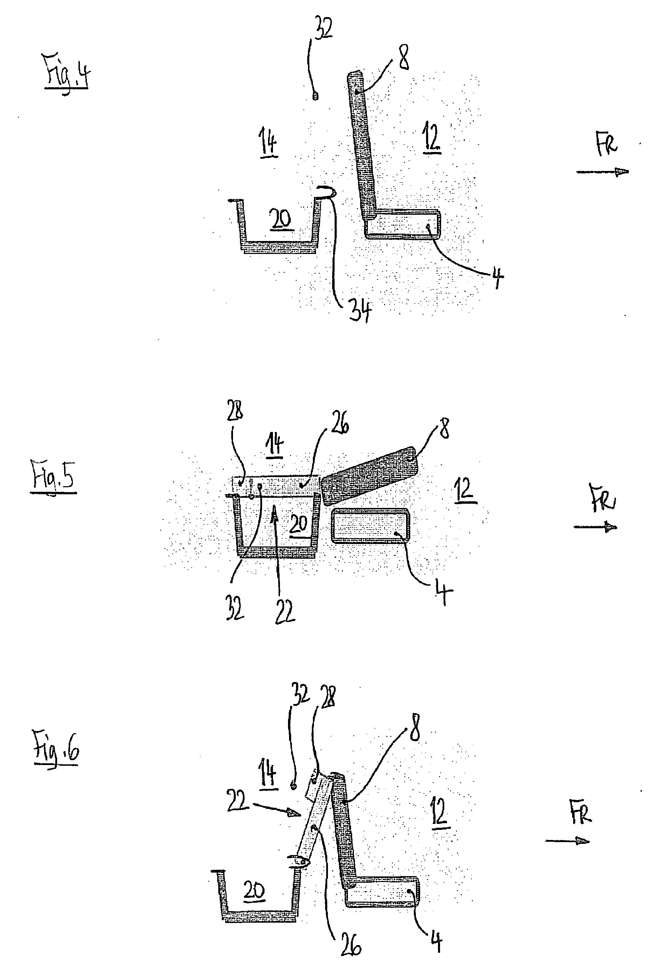

Gleichzeitig ermöglicht die nach hinten offene Führung 34 der Schwenklagerung 24, dass der Laderaumboden 22 aus dem Kraftfahrzeug entnommen werden kann. In Figur 4 ist die Konstellation ohne Laderaumboden 22 dargestellt, mit weiter verbesserten Möglichkeiten für die Unterbringung von Ladegut im Gepäckraum 14 des Kraftfahrzeugs.

Alternativ kann der Laderaumboden 22 bei nach vorne geklappter Rückenlehne 8 der Fondsitzanlage 2 den Gepäckraumabschnitt 20 überdecken, um eine ebene durchgehende Ladefläche zwischen Gepäckraum 14 und Fahrgastraum 12 zu erzeugen. Dies ist insbesondere bei einer hinteren Position der Fondsitzanlage 2 sinnvoll, bei der kein nennenswerter Spalt zwischen dem Laderaumboden 22 und der Hinterkante der Fondsitzanlage 2 vorliegt, wie in Figur 5 dargestellt.

Wie aus Figur 6 hervorgeht, kann der Laderaumboden 22 auch in der "Cargo-Stellung" verwendet werden, um die Blickdichtigkeit zwischen Fahrgastraum 12 und Gepäckraum 14 zu gewährleisten und gleichzeitig ein möglichst großes Gepäckraumvolumen bereitzustellen. Hierbei wird der Laderaumboden 22 an die Rückseite der Rückenlehne 8 angelehnt. Der Laderaumboden 22 kann in dieser Position zusätzlich arretiert werden. Die in Figur 6 nicht dargestellte Hutablage 16 kann verbaut bleiben.

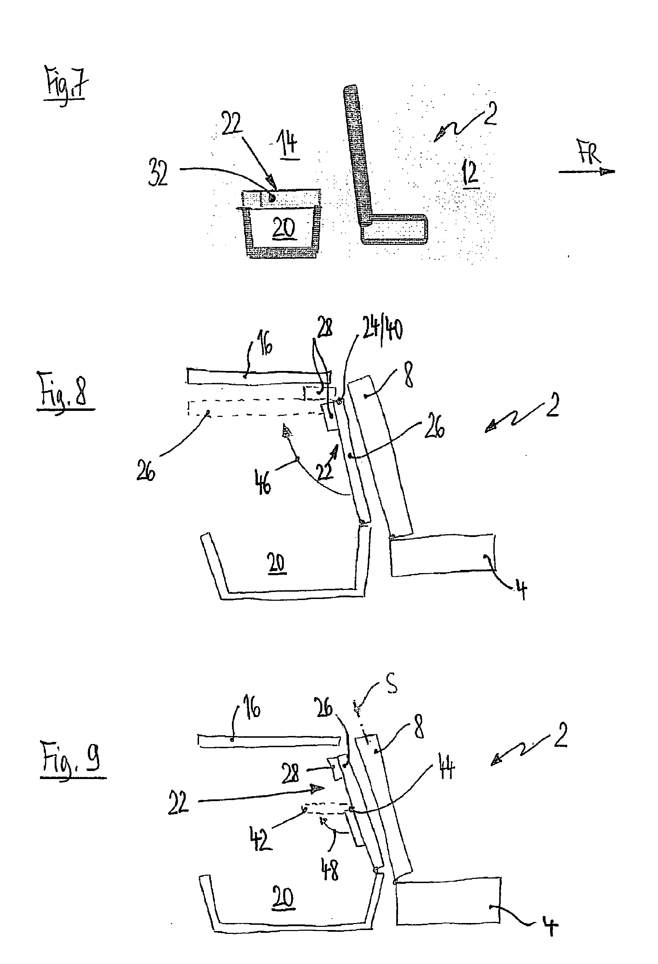

Figur 7 zeigt die Alternative einer in Fahrtrichtung FR verschobenen Fondsitzanlage 2, bei gleichzeitiger Abdeckung des Gepäckraumabschnittes 20 durch die Laderaumabdeckung 22.

Der Laderaumboden 22 kann ― in Querrichtung des Kraftfahrzeugs betrachtet - einteilig ausgeführt sein und sich über einen wesentlichen Teil der Breite des Fahrzeuginnenraums erstrecken. Alternativ kann sich der Laderaumboden 22 aus wenigstens zwei in Fahrzeugquerrichtung nebeneinander angeordneten Segmenten zusammensetzen, entsprechend einer gegebenenfalls unterschiedlichen Verstellung der einzelnen Komponenten einer davor angeordneten Sitzanlage 2 mit Einzelsitze. Durch diese Teilung des Laderaumbodens 22 ist es beispielsweise möglich, bei einer unterteilten Rückenlehne 8 eine erweiterte Durchladefunktion zu realisieren, die flexibel und unabhängig von den einzelnen Stellungen der Rückenlehne 8 genutzt werden kann. Dabei wird bei einer in Einzelsitze aufgeteilten Fondsitzanlage 2 oder bei einer geteilten Rückenlehne 8 (zum Beispiel Teilung im Verhältnis 50:50, 40:20:40, 35:65 etc.) eine Durchladefunktion ermöglicht, in Kombination mit dem erfindungsgemäßen Laderaumboden 22.

Die Figuren 8 und 9 zeigen weitere vorteilhafte Ausgestaltungen der Erfindung, mit zusätzlichen Funktionalitäten der Anordnung des Laderaumbodens 22.

Gemäß Figur 8 ist der Laderaumboden 22 um eine obere Schwenkachse 40 verschwenkbar. Hierzu muss der Laderaumboden 22 an der unteren Schwenkachse 24 entriegelt werden. Die obere Schwenkachse 40 ist im Bereich der Arretiereinrichtung 32 angeordnet. In einer bevorzugten Variante ist die Schwenkachse 40 in Baueinheit mit der Arretiereinrichtung 32 ausgeführt. Durch das Verschwenken gemäß dem Pfeil 46 um die Schwenkachse 40 kann der Laderaumboden 22 in eine obere, etwa horizontal ausgerichtete Position verlagert werden, in der er etwa auf Höhe der Oberkante der Rückenlehne 8 der Fondsitzanlage 2 verstaut wird, beispielsweise unmittelbar unterhalb der Hutablage 16. Hierdurch kann die Durchladefunktion bei (teilweise) umgeklappter Rückenlehne 8 und gleichzeitig das Stauvolumen im Bereich des unteren Gepäckraumabschnitts 20 genutzt werden, ohne dass der Laderaumboden 22 aus dem Kraftfahrzeug entnommen werden muss.

Figur 9 zeigt einen Laderaumboden 22 mit einem Zusatzboden 42. Der Zusatzboden 42 ist über eine Schwenkachse 44 an der Unterseite des Laderaumbodens 22 angeordnet und kann in der Sichtschutzposition S des Laderaumbodens 22 bedarfsweise gemäß dem Pfeil 48 ausgeklappt und in dieser Lage arretiert werden, um eine zusätzliche horizontale Unterteilung des Gepäckraums 14 und/oder eine zusätzliche Ablagefläche zu schaffen. Der Zusatzboden 42 kann sich über die gesamte Breite oder nur über einen Teil der Breite der Laderaumboden 22 erstrecken.

Die Erfindung lässt sich wie folgt zusammenfassen: Ein Fahrzeug weist einen Fahrgastraum 12 mit einer Sitzanlage 2 und einen hieran angrenzenden Gepäckraum 14 auf. Erfindungsgemäß ist ein Laderaumboden 22 vorgesehen, der entweder als Abdeckung für ein Staufach 20 im unteren Bereich des Gepäckraums 14 oder als Sichtschutzabdeckung zwischen Fahrgastraum 12 und Gepäckraum 14 eingesetzt werden kann. Hierzu ist der Laderaumboden 22 in seinem vorderen Endbereich um eine fahrzeugfest angeordnete Schwenklagerung 24, 34 drehbar gelagert. Somit ist die Lagerung unabhängig von den Komponenten 4, 8 der Sitzanlage 2, die gegebenenfalls individuell verstellbar sind. Die hochgeklappte Sichtschutzposition S des Laderaumbodens 22 wird durch eine selbsttätig wirkende Arretiereinrichtung 32 gewährleistet. Hierzu ist einerseits ein erstes Element der Arretiereinrichtung 32 am Laderaumboden 22 in dessen seitlichen hinteren Bereich sowie andererseits ein zweites Element der Arretiereinrichtung 32 an einem Seitenbereich des Fahrzeuginnenraums auf Brüstungshöhe vorgesehen.

## Patentansprüche

1. Anordnung eines Laderaumbodens (22) in einem Fahrzeug mit einem Gepäckraum (14), der sich hinter einer Sitzanlage befindet, wobei der Laderaumboden an seinem der Sitzanlage zugewandten vorderen Endabschnitt in einer Schwenklagerung (24, 34) geführt ist und wobei am Laderaumboden ein erstes Element einer Arretiereinrichtung (32) vorgesehen ist, das im Verlauf des Verschwenkens des Laderaumbodens in eine hochgeklappte Sichtschutzposition (5) mit einem zweiten Element der Arretiereinrichtung zusammenwirkt, das an wenigstens einem seitlichen Abschnitt des Fahrzeugs, insbesondere einem Abschnitt in Brüstungshöhe, vorgesehen ist.
**dadurch gekennzeichnet, dass** etwa in Brüstungshöhe eine Hutablage (16) als horizontaler Abschluss des Gepäckraums (14) angeordnet ist, dass der Laderaumboden (22) in einen vorderen und in einen hinteren Abschnitt (26 bzw. 28) unterteilt ist, wobei der hintere Abschnitt (28) gegenüber dem vorderen Abschnitt (26) verlagerbar ist und dass in der Sichtschutzposition (S) der hintere Abschnitt (28) des Laderaumbodens (22) umgeklappt ist, um ein Einschwenken in den Raum unterhalb der Hutablage (16) zu ermöglichen,

2. Anordnung nach Anspruch 1,
**dadurch gekennzeichnet, dass** in einer abgesenkten Abdeckposition (A) des Laderaumbodens (22) der hintere Abschnitt (28) des Laderaumbodens (22) fluchtend mit dem vorderen Abschnitt (26) ausgerichtet ist und eine durchgehende, etwa horizontal verlautende Ebene bildet.

3. Anordnung nach Anspruch 1 oder 2,
**dadurch gekennzeichnet, dass** der vordere und der hintere Abschnitt (26 bzw. 28) des Laderaumbodens (22) durch ein etwa quer zur Fahrtrichtung (FR) verlaufendes Filmscharnier (30) miteinander verbunden sind.

4. Anordnung nach einem der vorangegangenen Ansprüche,
**dadurch gekennzeichnet, dass** die Schwenklagerung (24, 34) fahrzeugfest ausgebildet ist.

5. Anordnung nach einem der vorangegangenen Ansprüche,
**dadurch gekennzeichnet, dass** die Arretiereinrichtung (32) so ausgebildet ist, dass sie bei Erreichen der Sichtschutzposition (S) den Laderaumboden (22) selbsttätig in der Sichtschutzposition (S) arretiert.

6. Anordnung nach einem der vorangegangenen Ansprüche,
**dadurch gekennzeichnet, dass** die Arretiereinrichtung (22) so ausgebildet ist, dass die Arretierung des Laderaumbodens (22) in der Sichtschutzposition (S) unabhängig von der Schwenkrichtung (6) des Laderaumbodens (22) erfolgt.

7. Anordnung nach einem der vorangegangenen Ansprüche,
**dadurch gekennzeichnet, dass** der Laderaumboden (22) in seiner etwa horizontalen Position als alleinige Abdeckung eines Staufaches (20) im unteren Bereich des Gepäckraums (14) dient.

8. Anordnung nach einem der vorangegangenen Ansprüche,
**dadurch gekennzeichnet, dass** die Sitzanordnung (2) eine hintere Sitzanordnung ist.

9. Anordnung nach einem der vorangegangenen Ansprüche,
**dadurch gekennzeichnet, dass** die Sitzanordnung (2) zwei Einzelsitze umfasst.

10. Anordnung nach einem der vorangegangenen Ansprüche,
**dadurch gekennzeichnet, dass** die Sitzanordnung (2) wenigstens eine in ihrer Neigung veränderliche Rückenlehne (8) umfasst.

11. Anordnung nach einem der vorangegangenen Ansprüche,
**dadurch gekennzeichnet, dass** die Sitzanordnung (2) wenigstens eine in Richtung der Fahrzeuglängsachse verschiebliche Sitzkomponente (4, 8) umfasst

12. Anordnung nach einem der vorangegangenen Ansprüche,
**dadurch gekennzeichnet, dass** der Laderaumboden (22) über eine im Bereich der Arretiereinrichtung (32) vorgesehene obere Schwenkachse (40) verschwenkbar ist.

13. Anordnung nach Anspruch 12,
**dadurch gekennzeichnet, dass** der Laderaumboden (22) nach Verschwenken um die obere Schwenkachse (40) in einer etwa horizontalen Position etwa auf Höhe der Oberkante der Rückenlehne (8) der Sitzanordnung (2) arretierbar ist.

14. Anordnung nach einem der vorangegangenen Ansprüche,
**dadurch gekennzeichnet, dass** an der Unterseite des Laderaumbodens (22) wenigstens ein verschwenkbarer Zusatzboden (42) vorgesehen ist.

## Claims

1. An arrangement of a cargo-space floor (22) in a vehicle having a luggage space (14) behind seats, wherein the front end portion, facing the seats, of the cargo-space floor is guided in a swivel bearing (24, 34) and wherein a first component of a locking device (32) is provided on the cargo-space floor and, during pivoting of the floor into a tilted-up screening position (S), cooperated with a second component of the locking device provided on at least one lateral portion of the vehicle, especially a portion at parapet height,
**characterised in that** a hat rest (16) in the form of a horizontal termination of the luggage space (14) is disposed approximately at parapet height, the cargo-space floor (22) is divided into a front portion (26) and a rear portion (28), wherein the rear portion (28) is movable relative to the front portion (26), and in the screening position (S) the rear portion (28) of the floor (22) is pivoted so as to swivel into the space under the hat rest (16).

2. An arrangement according to claim 1,
**characterised in that** when the floor (22) is in a lowered cover position (A), the rear portion (28) of the floor (22) is aligned flush with the front portion (26) and forms a continuous approximately horizontal surface.

3. An arrangement according to claim 1 or claim 2,
**characterised in that** the front portion (26) and the rear portion (28) of the floor (22) are connected by a film hinge (30) approximately perpendicular to the direction of travel (FR).

4. An arrangement according to any of the preceding claims,
**characterised in that** the swivel bearing (24, 34) is fixed to the vehicle.

5. An arrangement according to any of the preceding claims,
**characterised in that** the locking device (32) is constructed so that when it reaches the screening position (S) it automatically locks the floor (22) in the screening position (S).

6. An arrangement according to any of the preceding claims,
**characterised in that** the locking device (32) is constructed so that the floor (22) is locked in the screening position (S) independently of the slope (6) of the floor (22).

7. An arrangement according to any of the preceding claims,
**characterised in that** in its approximately horizontal position, the floor (22) is the only cover of a stowage compartment (20) in the lower region of the luggage space (14).

8. An arrangement according to any of the preceding claims,
**characterised in that** the seating (2) is at the rear.

9. An arrangement according to any of the preceding claims,
**characterised in that** the seating (2) comprises two individual seats.

10. An arrangement according to any of the preceding claims,
**characterised in that** the seating (2) comprises at least one tiltable back rest (8).

11. An arrangement according to any of the preceding claims,
**characterised in that** the seating (2) comprises at least one seat component (4, 8) movable in the direction of the longitudinal axis of the vehicle.

12. An arrangement according to any of the preceding claims,
**characterised in that** the floor (22) is pivotable around a top axis (40) in the neighbourhood of the locking device (32).

13. An arrangement according to claim 12,
**characterised in that** after pivoting around the top axis (40) the floor (22) is lockable in an approximately horizontal position approximately level with the top edge of the back (8) of the seats (2).

14. An arrangement according to any of the preceding claims,
**characterised in that** at least one pivotable additional floor (42) is provided on the underside of the floor (22).

## Revendications

1. Agencement d'un plancher de volume de coffre (22) dans un véhicule automobile comportant un compartiment à bagages (14) qui est situé à l'arrière d'un dispositif de sièges, ce plancher de volume de coffre étant guidé à son extrémité avant tournée vers le dispositif de sièges dans un palier pivotant (24, 34), et sur le plancher du volume de coffre est monté un premier élément d'un dispositif de blocage (32) qui coopère, pendant le basculement (3) de ce plancher dans une position de protection de la visibilité (5) basculée vers le haut avec un second élément du dispositif de blocage qui est monté sur au moins une partie latérale du véhicule, en particulier une partie située à hauteur de poitrine,
**caractérisé en ce que**
essentiellement à hauteur de poitrine est montée une plage arrière (16) constituant un élément de fermeture horizontal du compartiment à bagages (14),
le plancher de volume de coffre (22) est subdivisé en un tronçon avant et un tronçon arrière (26 ou 28), le tronçon arrière (28) étant déplaçable par rapport au tronçon avant (26), et
dans la position de protection de la visibilité (S), le tronçon arrière (28) du plancher de volume de coffre (22) est rabattu pour permettre un transfert dans le volume situé au-dessous de la plage arrière (16).

2. Agencement conforme à la revendication 1,
**caractérisé en ce que**
lorsque le plancher de volume de coffre (22) est situé dans une position de recouvrement abaissée (A) le tronçon arrière (28) de ce plancher (22) est aligné avec le tronçon avant (26), et forme un plan continu dirigé essentiellement horizontalement.

3. Agencement conforme à la revendication 1 ou 2,
**caractérisé en ce que**
le tronçon avant et le tronçon arrière (28, 29) du plancher de volume de coffre (22), sont reliés par une charnière pelliculaire (30) dirigée essentiellement transversalement à la direction de déplacement (F, R).

4. Agencement conforme à l'une des revendications précédentes,
**caractérisé en ce que**
l'élément de palier pivotant (24, 34) est solidaire du véhicule.

5. Agencement conforme à l'une des revendications précédentes,
**caractérisé en ce que**
le dispositif de blocage (32) est réalisé de sorte que, lorsque la position de protection de la visibilité (S) a été atteinte, il bloque automatiquement le plancher de volume de coffre (22) dans cette position.

6. Agencement conforme à l'une des revendications précédentes,
**caractérisé en ce que**
le dispositif de blocage (32) est réalisé de sorte que le blocage du plancher de volume de coffre (22) dans la position de protection de la visibilité (S) s'effectue indépendamment de la direction de pivotement (6) de ce plancher (22).

7. Agencement conforme à l'une des revendications précédentes,
**caractérisé en ce que**
dans sa position essentiellement horizontale le plancher de volume de coffre (22) constitue le seul recouvrement d'un casier (20) dans la zone inférieure du compartiment à bagages (14).

8. Agencement conforme à l'une des revendications précédentes,
**caractérisé en ce que**
le dispositif de sièges (2) est un dispositif de sièges arrières.

9. Agencement conforme à l'une des revendications précédentes,
**caractérisé en ce que**
le dispositif de sièges (2) comporte deux sièges indépendants.

10. Agencement conforme à l'une des revendications précédentes,
**caractérisé en ce que**
le dispositif de sièges (2) comporte au moins un dossier d'inclinaison variable (8).

11. Agencement conforme à l'une des revendications précédentes,
**caractérisé en ce que**
le dispositif de sièges (2) comporte au moins un élément de siège (4, 8) susceptible de coulisser en direction de l'axe longitudinal du véhicule.

12. Agencement conforme à l'une des revendications précédentes,
**caractérisé en ce que**
le plancher de volume de coffre (22) est susceptible de pivoter sur un axe pivotement supérieur (40) situé dans la zone du dispositif de blocage (32).

13. Agencement conforme à la revendication 12,
**caractérisé en ce que**
le plancher de volume de coffre (22) peut être bloqué, après avoir pivoté autour de l'axe de pivotement supérieur (40) dans une position essentiellement horizontale, située essentiellement à hauteur du bord supérieur du dossier (8) du dispositif de sièges (2).

14. Agencement conforme à l'une des revendications précédentes,
**caractérisé en ce que**
sur la face inférieure du plancher de volume de coffre (22) est monté au moins un plancher complémentaire pivotant (42).
